# EUROPÄISCHE PATENTANMELDUNG

(11) **EP 3 733 443 A1**
(43) Veröffentlichungstag der Anmeldung: **04.11.2020**
(21) Anmeldenummer: 20170799.9
(22) Anmeldetag: 22.04.2020
(51) Int. Cl.: B60L 53/60

(54) **VERFAHREN ZUM LADEN EINES ENERGIESPEICHERS EINES KRAFTFAHRZEUGS MIT EINER LADESTATION**

(30) Priorität: 29.04.2019 DE 102019111043
(71) Anmelder: Innogy SE, 45128 Essen (DE)
(72) Erfinder: MEREDITH, Steven, 44229 Dortmund (DE)
(74) Vertreter: Pfeffer, Michael

(57) **Zusammenfassung**

Die Erfindung betrifft ein Verfahren zum Laden eines Energiespeichers eines Kraftfahrzeugs (2) mit einer Ladestation (3), welche mit einer einen Sensor (5) aufweisenden mobilen Kommunikationsvorrichtung (4) bedient wird, wobei das Laden des Energiespeichers nach dem Empfang und der Verarbeitung von Zugangskenndaten durch eine Recheneinheit (12) erfolgt, wobei der Sensor (5) mindestens eine von einem Benutzer erste Gestik erfasst, und die erste Gestik als Datensatz in einem Speicher (9) als Sollgestik abgespeichert wird, wobei nachfolgend der Sensor (5) mindestens eine zweite Gestik des Benutzers erfasst und diese mit der in dem Speicher (9) abgespeicherten Sollgestik verglichen wird, wobei bei einer Übereinstimmung der zweiten Gestik mit der Sollgestik die Zugangskenndaten zu der Recheneinheit (12) versendet werden, und nachfolgend ein Startsignal durch die Recheneinheit (12) erzeugt wird, welches von der Ladestation (3) verarbeitet wird.

## Beschreibung

Die Erfindung betrifft ein Verfahren zum Laden eines Energiespeichers eines Kraftfahrzeugs mit einer Ladestation, welche mit einer einen Sensor aufweisenden mobilen Kommunikationsvorrichtung bedient wird, wobei das Laden des Energiespeichers nach dem Empfang und der Verarbeitung von Zugangskenndaten durch eine Recheneinheit erfolgt. Des Weiteren betrifft die Erfindung ein Ladesystem mit einer Ladestation und einer mobilen Kommunikationsvorrichtung zum Laden eines Energiespeichers eines Kraftfahrzeugs.

Es ist ein Ladesystem bekannt, bei welchem ein Benutzer einen Energiespeicher eines Kraftfahrzeugs mit Hilfe einer Ladestation auflädt. Um das Aufladen des Energiespeichers durchzuführen, verwendet der Benutzer ein Smartphone, auf welchem eine Softwareapplikation gespeichert ist, mit welcher der Benutzer ein Startsignal erzeugen kann, welches zum Aufladen des Energiespeichers dient. Dazu muss der Benutzer das Smartphone an die Ladesäule halten, so dass zwischen dem Smartphone und der Ladestation eine RFID-Kommunikationsverbindung hergestellt wird, welche den Benutzer authentifiziert, um das Startsignal zu erzeugen.

Es ist die Aufgabe der Erfindung, ein Verfahren bzw. ein Ladesystem zum Laden eines Energiespeichers eines Kraftfahrzeugs mit einer Ladestation bereitzustellen, welches den Bedienkomfort für den Benutzer erhöht.

Die Aufgabe wird gelöst durch ein Verfahren gemäß Patentanspruch 1 und einem Ladesystem gemäß Patentanspruch 11. Vorteilhafte Ausgestaltungen des Verfahrens sind in den Unteransprüchen beschrieben.

Es ist ein Verfahren zum Laden eines Energiespeichers eines Kraftfahrzeugs mit einer Ladestation vorgesehen, wobei die Ladestation mit einer einen Sensor aufweisenden mobilen Kommunikationsvorrichtung bedient wird, wobei das Laden des Energiespeichers nach dem Empfang und der Verarbeitung von Zugangskenndaten durch eine Recheneinheit erfolgt, wobei der Sensor mindestens eine von einem Benutzer erste Gestik erfasst, und die erste Gestik als Datensatz in einem Speicher als Sollgestik abgespeichert wird, wobei nachfolgend der Sensor mindestens eine zweite Gestik des Benutzers erfasst und diese mit der in dem Speicher abgespeicherten Sollgestik verglichen wird, wobei bei einer Übereinstimmung der zweiten Gestik mit der Sollgestik die Zugangskenndaten zu der Recheneinheit versendet werden, und nachfolgend ein Startsignal durch die Recheneinheit erzeugt wird, welches von der Ladestation verarbeitet wird.

Als Gestik kann die Gesamtheit von Gesten angesehen werden, welche beispielsweise Bewegungen der Arme, der Hände, der Beine, der Füße, des Kopfes oder auch der Augen beschreiben. Gesten ersetzen somit Mitteilungen in einer jeweiligen Lautsprache und sind Zeichen der nonverbalen Kommunikation. Durch dieses Verfahren kann der Komfort für den Benutzer deutlich erhöht, weil der Benutzer allein durch die zweite Gestik und mit geringen Kraftaufwand, beispielsweise mit einer Handbewegung, den Energiespeicher seines Kraftfahrzeugs aufladen und/oder entladen kann. Zudem wird die Bedienung der mobilen Kommunikationsvorrichtung für den Benutzer verbessert, weil die mobile Kommunikationsvorrichtung sofort die Gestik mittels des Sensors erkennt und/oder lediglich eine Softwareapplikation auf der gestartet mobile Kommunikationsvorrichtung werden muss, mit welcher das Erkennen der Gestik mittels des Sensors ermöglicht werden kann. Die erste Gestik und die zweite Gestik können identisch ausgeführt sein oder sich geringfügig unterscheiden. Der Bewegungsablauf der ersten Gestik soll zu 90% bis 100% der zweiten Gestik entsprechen, um den Ladevorgang zuverlässig zu starten und/oder zu beenden.

Bevorzugt kann vorgesehen sein, dass die Zugangskenndaten zur Authentifizierung verwendet werden, wobei die Zugangskenndaten zumindest eine Kennung umfassen, welche dem Benutzer eindeutig zugeordnet ist. Die Zugangskenndaten können vorzugsweise eine Benutzer-ID und/oder einen Zeitstempel und/oder Zahlungsdaten und/oder Ortsdaten und/oder Gestikdaten umfassen, um den Ladevorgang in vorteilhafterweise eindeutig dem Benutzer zuzuordnen. Der Benutzer kann sich bei der Recheneinheit anmelden und seine persönlichen Daten hinterlegen, mit welchen beispielsweise eine Benutzer-ID erzeugt wird. Die Gestikdaten können Daten über das Ergebnis des Soll-Ist-Vergleichs der ersten Gestik und der zweiten Gestik umfassen. Die Recheneinheit kann die Zugangskenndaten, insbesondere die Benutzer-ID verarbeiten und erzeugt vorzugsweise erst dann ein Startsignal, wenn die von der mobilen Kommunikationsvorrichtung an die Recheneinheit versendeten Zugangskenndaten, insbesondere die Benutzer-ID der Recheneinheit bekannt sind. Das Startsignal kann vollumfänglich alle Zugangskenndaten umfassen oder nur einen Teil der Zugangskenndaten und/oder einen ID-Datensatz und/oder einen Auslösedatensatz umfassen, welcher lediglich einen Befehl zum Starten bzw. Beenden des Ladevorgangs enthält. Der Benutzer kann sich bei der Recheneinheit anmelden und seine persönlichen Daten hinterlegen, mit welchen beispielsweise die Benutzer-ID erzeugt wird, welche dem Benutzer als ID-Datensatz zur Verfügung gestellt werden kann.

Bevorzugt umfasst die mobile Kommunikationsvorrichtung eine erste Kommunikationsschnittstelle, mit welcher die Zugangskenndaten und/oder das Startsignal an eine zweite Kommunikationsschnittstelle gesendet werden, welche die Ladestation aufweist. Die zweite und/oder die erste Kommunikationsschnittstelle können beispielsweise eine Steuereinheit mit einer Antennenvorrichtung umfassen, welche das Startsignal und/oder die Zugangskenndaten empfängt. Dabei können die Zugangskenndaten und/oder das Startsignal verschlüsselt versendet werden.

Nach einer weiteren bevorzugten Ausführung des Verfahrens kann vorgesehen sein, dass die Zugangskenndaten von der mobilen Kommunikationsvorrichtung an ein Backend, insbesondere an einen Servercomputer gesendet werden und von dem Backend an die Ladestation gesendet werden. Das Backend, insbesondere die Recheneinheit kann die Zugangskenndaten zuverlässig verarbeiten und auswerten. Die Versendung der Zugangskenndaten von der mobilen Kommunikationsvorrichtung an das Backend kann verschlüsselt erfolgen. Ferner kann auch die Versendung der Zugangskenndaten und/oder das Startsignal und/oder weiterer Daten von dem Backend an die Ladestation vorzugsweise verschlüsselt erfolgen. Das Backend, insbesondere der Servercomputer kann die Recheneinheit umfassen und an einem von der Ladestation entfernten Ort sicher angeordnet sein.

Das Verfahren kann einfach und kostengünstig durchgeführt werden, wenn der Speicher, in welchem die Sollgestik gespeichert wird, und /oder die Recheneinheit in der Ladestation und/oder in der mobilen Kommunikationsvorrichtung und/oder im Backend angeordnet ist.

Um die Sollgestik eindeutig zu erkennen, kann vorgesehen sein, dass die erste und/oder die zweite Gestik durch eine Handbewegung und/oder Augenbewegung und/oder Mundbewegung und/oder Beinbewegung und/oder Fußbewegung erzeugt wird. Diese Gestiken können einfach und sicher ohne großen Aufwand von einem Benutzer durchgeführt werden. Gestiken können fotografiert werden, wenn mindestens zwei Bilder einer Gestik zugeordnet werden können.

Nach einer weiteren bevorzugten Ausführung des Verfahrens kann vorgesehen sein, dass die mobile Kommunikationsvorrichtung als Smartphone ausgebildet ist und der Sensor als Kameraeinheit ausgebildet ist, welche die erste Gestik und/oder die zweite Gestik erfasst, vorzugsweise fotografiert oder filmt. Die Kameraeinheit kann die entsprechende Gestik zuverlässig und einfach erkennen. Die Kameraeinheit kann beispielsweise bei einem Smartphone auch für andere Zwecke benutzt werden, wie zum Beispiel als Kameraeinheit für private Bildaufnahmen oder Filme. Vorzugsweise kann genau diese Kameraeinheit auch für die Aufnahme der entsprechenden Gestik verwendet werden.

Der Benutzer kann zuverlässig über den Ladevorgang des Energiespeichers informiert werden, wenn nach einer positiven Authentifizierung mittels der Zugangskenndaten der Benutzer eine Rückmeldung erhält. Dabei kann die Rückmeldung als Geräusch, insbesondere als Piepston über einen an der mobilen Kommunikationsvorrichtung, insbesondere dem Smartphone, angeordneten Lautsprecher erfolgen und/oder durch eine Vibration eines Gehäuses der mobilen Kommunikationsvorrichtung, insbesondere des Smartphones und/oder durch ein Auf- und Ableuchten einer an der mobilen Kommunikationsvorrichtung, insbesondere am Smartphone, angeordneten Anzeigevorrichtung. Der Piepston kann einfach und kostengünstig durch die mobile Kommunikationsvorrichtung erzeugt werden, insbesondere dann, wenn die mobile Kommunikationsvorrichtung als Smartphone ausgebildet ist. In diesem Fall können die bereits beim Smartphone vorhandenen Lautsprecher zur Wiedergabe des Geräuschs, insbesondere des Piepstons verwendet werden, wodurch das Smartphone kompakt ausgebildet werden kann. Die Anzeigevorrichtung kann beispielsweise als Bildschirm ausgebildet sein, welcher unterschiedliche Farbtöne anzeigen kann.

Bevorzugt kann vorgesehen sein, dass mittels der zweiten Gestik das Laden des Energiespeichers gestartet und/oder beendet werden kann. Die Verarbeitung der Zugangskenndaten, insbesondere Daten des Soll-Ist-Vergleichs der ersten Gestik und der zweiten Gestik und das Empfangen und Versenden dieser kann das Startsignal erzeugen. Ferner kann auch durch eine wiederholte Durchführung der zweiten Gestik der Ladevorgang beendet werden. Dabei können die Zugangskenndaten erneut zur Recheneinheit versendet werden, wobei die Recheneinheit ein Beendigungssignal erzeugt, welches an die Ladestation und/oder an die mobile Kommunikationsvorrichtung versendet wird und dort weiter verarbeitet wird.

Ferner ist bevorzugt ein Ladesystem mit einer Ladestation und einer mobilen Kommunikationsvorrichtung zum Laden eines Energiespeichers eines Kraftfahrzeugs vorgesehen, wobei die Ladestation mit der einen Sensor aufweisenden mobilen Kommunikationsvorrichtung bedienbar ist, wobei das Laden des Energiespeichers nach dem Empfang und der Verarbeitung von Zugangskenndaten durch eine Recheneinheit erfolgt, wobei mindestens eine Gestik des Benutzers durch den Sensor erfassbar ist, und die erste Gestik als Datensatz in einem Speicher als Sollgestik abspeicherbar ist, wobei nachfolgend mindestens eine zweite Gestik des Benutzers erfassbar ist und diese mit der in dem Speicher abgespeicherten Sollgestik vergleichbar ist, wobei bei einer Übereinstimmung der zweiten Gestik mit der Sollgestik die Zugangskenndaten zu der Recheneinheit versendbar ist, und nachfolgend ein Startsignal durch die Recheneinheit erzeugbar ist, welches von der Ladestation verarbeitbar ist.

Die Erfindung sowie das technische Umfeld werden nachfolgend anhand der Figuren näher erläutert. Es ist darauf hinzuweisen, dass die Figuren besonders bevorzugte Ausführungsbeispiele der Erfindung zeigen, die Erfindung jedoch nicht darauf beschränkt ist.

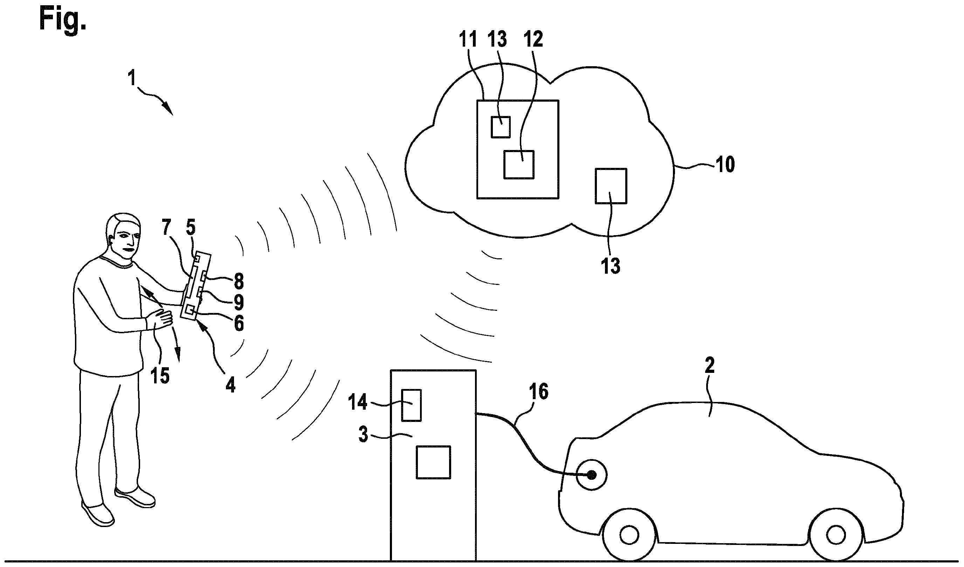

Die einzige Figur zeigt ein Ladesystem, bei welchem das erfindungsgemäße Verfahren verwendet werden kann.

In der Figur ist ein Ladesystem 1 zum Laden eines Energiespeichers eines als Elektrofahrzeug ausgebildeten Kraftfahrzeugs 2 gezeigt, welches eine Ladestation 3 und eine mobilen Kommunikationsvorrichtung 4, vorzugsweise ein Smartphone umfasst, mit welcher die Ladestation 3 bedient werden kann. Die mobile Kommunikationsvorrichtung 4 umfasst einen Sensor 5, welcher beispielsweise als Kameraeinheit ausgebildet sein kann. Ferner weist die mobile Kommunikationsvorrichtung 4 einen Lautsprecher 6 und eine als Bildschirm ausgebildete Anzeigevorrichtung 7 auf. Zusätzlich kann die mobile Kommunikationsvorrichtung 4 eine erste Kommunikationsschnittstelle 8 und einen Speicher 9 aufweisen, der zum Abspeichern von Daten, insbesondere von Gestiken ausgebildet ist. Die erste Kommunikationsschnittstelle 8 kann beispielsweise eine Steuereinheit mit einer Antennenvorrichtung umfassen, welche das Startsignal und/oder die Zugangskenndaten und/oder andere relevante Daten versendet oder empfängt.

Des Weiteren ist ein Backend 10 vorgesehen, welches einen Servercomputer 11 mit einer Recheneinheit 12 umfasst. Zusätzlich oder alternativ könnte das Backend auch den Speicher 9 aufweisen. Das Backend 10 verfügt ebenfalls über eine Sende- und/oder Empfangsvorrichtung 13, mit welcher im Allgemeinen Daten empfangen und versendet werden können. Die Sende- und/oder Empfangsvorrichtung 13 kann Bestandteil des Servercomputers 11 sein oder zusätzlich oder alternativ im Backend 10 angeordnet sein. Der Benutzer kann sich bei der Recheneinheit 12 anmelden und seine persönlichen Daten hinterlegen, mit welchen beispielsweise eine Benutzer-ID erzeugt wird, welche dem Benutzer als ID-Datensatz zur Verfügung gestellt werden kann.

Die Ladestation 3 umfasst eine zweite Kommunikationsschnittstelle 14, welche zur Kommunikation mit der ersten Kommunikationsschnittstelle 8 der mobilen Kommunikationsvorrichtung 4 und/oder mit der Sende- und/oder Empfangsvorrichtung 13 ausgebildet ist. Die zweite Kommunikationsschnittstelle 14 kann beispielsweise eine weitere Steuereinheit mit einer weiteren Antennenvorrichtung umfassen, welche das Startsignal und/oder die Zugangskenndaten und/oder andere relevante Daten versendet oder empfängt.

Die Recheneinheit 12 kann zusätzlich oder alternativ auch in der Ladestation 3 angeordnet sein.

Nachfolgend wird das Verfahren zum Laden des Energiespeichers des Kraftfahrzeugs 2 beschrieben. Der vorzugsweise als Kameraeinheit ausgebildete Sensor 5 der mobilen Kommunikationsvorrichtung 4 erfasst mindestens eine von einem Benutzer erzeugte erste Gestik, welche beispielsweise als Handbewegung einer Hand 15 ausgestaltet sein kann, wobei die erste Gestik als Datensatz vorzugsweise in dem Speicher 9 als Sollgestik abgespeichert wird. Wenn der Benutzer den Energiespeicher des Kraftfahrzeugs 2 aufladen möchte, verbindet er beispielsweise mit einem Ladekabel 16 die Ladestation 3 mit dem Kraftfahrzeug 2. Anschließend führt der Benutzer eine zweite Gestik aus, welche im Wesentlichen der Ausführung der ersten Gestik entsprechen soll. Der Sensor 5 erfasst die zweite Gestik des Benutzers und diese wird dann mit der in dem Speicher 9 abgespeicherten Sollgestik verglichen, wobei bei einer Übereinstimmung der zweiten Gestik mit der Sollgestik Zugangskenndaten zu der Recheneinheit 12 versendet werden. Dabei kann die erste Gestik und/oder die zweite Gestik vorzugsweise durch die Kameraeinheit fotografiert oder gefilmt. Die Zugangskenndaten können vorzugsweise eine Benutzer-ID und/oder einen Zeitstempel und/oder Zahlungsdaten und/oder Ortsdaten und/oder Gestikdaten umfassen, um den Ladevorgang in vorteilhafterweise eindeutig dem Benutzer zuzuordnen. Die Gestikdaten können Ergebnisse über den Soll-Ist-Vergleich der ersten Gestik und der zweiten Gestik umfassen. Die Zugangskenndaten werden über das Backend 10 mit Hilfe der ersten Kommunikationsschnittstelle 8 an die Sende- und/oder Empfangsvorrichtung 13 gesendet und von dieser empfangen und/oder an eine zweite Kommunikationsschnittstelle 14 gesendet und von dieser empfangen. Nachfolgend wird ein Startsignal durch die Recheneinheit 12 erzeugt, welches von dem Backend 10, insbesondere der Sende- und/oder Empfangsvorrichtung 13 an die zweite Kommunikationsschnittstelle 14 der Ladestation 3 gesendet wird und von der Ladestation 3, insbesondere von eine Steuereinheit der Ladestation 3 verarbeitet wird. Nach einer positiven Authentifizierung der Zugangskenndaten vorzugsweise durch die Recheneinheit 12 erhält der Benutzer vorzugsweise von der Ladestation 3 und/oder dem Backend 10 eine Rückmeldung, dass der Ladevorgang zum Aufladen des Energiespeichers begonnen hat. Die Rückmeldung kann dabei als Geräusch, insbesondere als Piepston über den an der mobilen Kommunikationsvorrichtung 4, insbesondere dem Smartphone, angeordneten Lautsprecher 6 erfolgen und/oder durch eine Vibration eines Gehäuses der mobilen Kommunikationsvorrichtung 4, insbesondere des Smartphones und/oder durch ein Auf- und Ableuchten der an der mobilen Kommunikationsvorrichtung 4, insbesondere am Smartphone, angeordneten Anzeigevorrichtung 7. Im Ergebnis kann mittels der zweiten Gestik das Laden des Energiespeichers gestartet und/oder beendet werden.

Andere Ausführungen des Verfahrens sind möglich. So kann die erste und/oder die zweite Gestik auch durch eine Augenbewegung und/oder Mundbewegung und/oder Beinbewegung und/oder Fußbewegung erzeugt werden. Der Speicher 9 kann auch im Backend 10, vorzugsweise in dem Servercomputer 11 angeordnet sein und/oder in der Ladestation 3.

### Bezugszeichenliste

- 1: Ladesystem
- 2: Kraftfahrzeug
- 3: Ladestation
- 4: Mobile Kommunikationsvorrichtung
- 5: Sensor
- 6: Lautsprecher
- 7: Anzeigevorrichtung
- 8: erste Kommunikationsschnittstelle
- 9: Speicher
- 10: Backend
- 11: Servercomputer
- 12: Recheneinheit
- 13: Sende- und/oder Empfangsvorrichtung
- 14: zweite Kommunikationsschnittstelle
- 15: Hand
- 16: Ladekabel

## Patentansprüche

1. Verfahren zum Laden eines Energiespeichers eines Kraftfahrzeugs (2) mit einer Ladestation (3), welche mit einer einen Sensor (5) aufweisenden mobilen Kommunikationsvorrichtung (4) bedient wird, wobei das Laden des Energiespeichers nach dem Empfang und der Verarbeitung von Zugangskenndaten durch eine Recheneinheit (12) erfolgt,
**dadurch gekennzeichnet, dass**
der Sensor (5) mindestens eine von einem Benutzer erste Gestik erfasst, und die erste Gestik als Datensatz in einem Speicher (9) als Sollgestik abgespeichert wird, wobei nachfolgend der Sensor (5) mindestens eine zweite Gestik des Benutzers erfasst und diese mit der in dem Speicher (9) abgespeicherten Sollgestik verglichen wird, wobei bei einer Übereinstimmung der zweiten Gestik mit der Sollgestik die Zugangskenndaten zu der Recheneinheit (12) versendet werden, und nachfolgend ein Startsignal durch die Recheneinheit (12) erzeugt wird, welches von der Ladestation (3) verarbeitet wird.

2. Verfahren nach Anspruch 1, **dadurch gekennzeichnet, dass** die Zugangskenndaten zur Authentifizierung verwendet werden, wobei die Zugangskenndaten zumindest eine Kennung umfassen, welche dem Benutzer eindeutig zugeordnet ist.

3. Verfahren nach Anspruch 1 oder 2, **dadurch gekennzeichnet, dass** die mobile Kommunikationsvorrichtung (4) eine erste Kommunikationsschnittstelle (8) umfasst, mit welcher die Zugangskenndaten und/oder das Startsignal an eine zweite Kommunikationsschnittstelle (14) gesendet werden, welche die Ladestation (3) aufweist.

4. Verfahren nach mindestens einem der Ansprüche 1 bis 3, **dadurch gekennzeichnet, dass** die Zugangskenndaten von der mobilen Kommunikationsvorrichtung (4) an ein Backend (10), insbesondere an einen Servercomputer (11) gesendet werden und von dem Backend (10) an die Ladestation (3) gesendet werden.

5. Verfahren nach mindestens einem der Ansprüche 1 bis 4, **dadurch gekennzeichnet, dass** der Speicher (9), in welchem die Sollgestik gespeichert wird, und /oder die Recheneinheit (12) in der Ladestation (3) und/oder in der mobilen Kommunikationsvorrichtung (4) und/oder im Backend (10) angeordnet ist.

6. Verfahren nach mindestens einem der Ansprüche 1 bis 5, **dadurch gekennzeichnet, dass** die erste und/oder die zweite Gestik durch eine Handbewegung und/oder Augenbewegung und/oder Mundbewegung und/oder Beinbewegung und/oder Fußbewegung erzeugt wird.

7. Verfahren nach mindestens einem der Ansprüche 1 bis 6, **dadurch gekennzeichnet, dass** die mobile Kommunikationsvorrichtung (4) als Smartphone ausgebildet ist und der Sensor (5) als Kameraeinheit ausgebildet ist, welche die erste Gestik und/oder die zweite Gestik erfasst, vorzugsweise fotografiert oder filmt.

8. Verfahren nach mindestens einem der Ansprüche 1 bis 7, **dadurch gekennzeichnet, dass** nach einer positiven Authentifizierung mittels der Zugangskenndaten der Benutzer eine Rückmeldung erhält.

9. Verfahren nach Anspruch 8, **dadurch gekennzeichnet, dass** die Rückmeldung als Geräusch, insbesondere als Piepston über einen an der mobilen Kommunikationsvorrichtung (4), insbesondere dem Smartphone, angeordneten Lautsprecher (6) erfolgt und/oder durch eine Vibration eines Gehäuses der mobilen Kommunikationsvorrichtung (4), insbesondere des Smartphones und/oder durch ein Auf- und Ableuchten einer an der mobilen Kommunikationsvorrichtung (4), insbesondere am Smartphone, angeordneten Anzeigevorrichtung (7).

10. Verfahren nach mindestens einem der Ansprüche 1 bis 9, **dadurch gekennzeichnet, dass** mittels der zweiten Gestik das Laden des Energiespeichers gestartet und/oder beendet werden kann.

11. Ladesystem (1) mit einer Ladestation (3) und einer mobilen Kommunikationsvorrichtung (4) zum Laden eines Energiespeichers eines Kraftfahrzeugs (2) vorzugsweise mit einem Verfahren gemäß mindestens einem der Ansprüche 1 bis 10, wobei die Ladestation (3) mit der einen Sensor (5) aufweisenden mobilen Kommunikationsvorrichtung (4) bedienbar ist, wobei das Laden des Energiespeichers nach dem Empfang und der Verarbeitung von Zugangskenndaten durch eine Recheneinheit (12) erfolgt,
**dadurch gekennzeichnet, dass**
mindestens eine Gestik des Benutzers durch den Sensor (5) erfassbar ist, und die erste Gestik als Datensatz in einem Speicher (5) als Sollgestik abspeicherbar ist,
wobei nachfolgend mindestens eine zweite Gestik des Benutzers erfassbar ist und diese mit der in dem Speicher (9) abgespeicherten Sollgestik vergleichbar ist, wobei bei einer Übereinstimmung der zweiten Gestik mit der Sollgestik die Zugangskenndaten zu der Recheneinheit (12) versendbar ist, und nachfolgend ein Startsignal durch die Recheneinheit (12) erzeugbar ist, welches von der Ladestation (3) verarbeitbar ist.
